# EUROPÄISCHE PATENTSCHRIFT

(11) **EP 1 080 963 B1**
(45) Veröffentlichungstag und Bekanntmachung des Hinweises auf die Patenterteilung: **09.06.2004**
(21) Anmeldenummer: 00116931.7
(22) Anmeldetag: 05.08.2000
(51) Int. Cl.: B60J 7/047, B60J 7/043, B60J 7/22

(54) **Mehrteiliges Schiebedach für ein Kraftfahrzeug**
Multi-part sliding roof for vehicles
Toit coulissant en plusieurs parties

(30) Priorität: 03.09.1999 DE 19941984
(43) Veröffentlichungstag der Anmeldung: 07.03.2001
(73) Patentinhaber: Dr.Ing. h.c.F. Porsche Aktiengesellschaft, 70435 Stuttgart (DE)
(72) Erfinder: Schmälzle, Manfred, 74357 Bönnigheim (DE); Thomas, Peter, 75181 Pforzheim (DE); Roth, Jan, 70563 Stuttgart (DE)

(56) Entgegenhaltungen:
- DE-A- 4 227 400
- DE-A- 19 851 366
- DE-U- 29 820 613
- US-A- 5 031 959
- US-A- 5 197 779

## Beschreibung

Die Erfindung befasst sich mit einem mehrteiligen Schiebedach für ein Kraftfahrzeug gemäß dem Oberbegriff des Anspruchs 1.

Aus der DE 42 27 400 C2 ist ein Schiebedach für Fahrzeuge mit mindestens zwei in Fahrzeuglängsrichtung verstellbaren Dachabschnitten zum wahlweise Verschließen oder mindestens teilweisen Freigeben einer durchgehenden Dachöffnung in einer festen Dachhaut bekannt. Die beiden Dachabschnitte sind in ihrer Schließstellung hintereinander und mindestens näherungsweise bündig mit der Kontur der festen Dachhaut angeordnet. Einer der beiden Dachabschnitte ist mittels einer an der Innenseite des Daches sitzenden Führung in Fahrzeuglängsrichtung verstellbar geführt. Der andere Dachabschnitt ist mittels einer an der Außenseite des Daches angeordneten Führung in Fahrzeuglängsrichtung derart verstellbar geführt, dass er von der mit der Kontur der festen Dachhaut mindestens näherungsweise bündigen Schließstellung in eine Offenstellung bringbar ist, in der er als Ganzes oberhalb der Dachhaut liegt.

Des weiteren ist aus der EP 0 648 629 B1 ein Glasdach bekannt, das zwischen seitlichen Dachrahmen angeordnet ist und einen längsbeweglichen Dachabschnitt und einen dessen Verlängerung bildender weiteren Dachabschnitt aufweist Zwischen den Dachrahmen ist ein benachbart dem Windschutzscheibenrahmen angebrachter erster vorderer winkelbeweglicher Dachabschnitt vorgesehen, an den sich ein zweiter Dachabschnitt anschließt, der den längsbeweglichen Dachabschnitt bildet und in dessen Verlängerung ein dritter fester Dachabschnitt vorgesehen ist, der den weiteren Dachabschnitt bildet.

Ferner ist aus der W096/01192 ein Schiebedach mit zwei etwa gleichlangen, längs verschiebbaren Dachabschnitten und einem hinteren festen Dachabschnitt - in Bezug auf die Fahrtrichtung - bekannt. Der erste vorn liegende Dachabschnitt ist schrägstellbar und in einer schräggestellten Stellung über den hinteren festen Dachabschnitt verfahrbar. Der zweite vorn liegende Dachabschnitt ist in einer Stellung unterhalb des hinteren festen Dachabschnitts verfahrbar. Der zweite vorn liegende Dachabschnitt ist in einer Stellung oberhalb des hinteren festen Dachabschnitts verfahrbar.

Aus der gattungsemäßen DE 198 51 366 A1 ist ein Sonnendach mit mehreren Platten bekannt, wobei an einem feststehenden Windabweiser sich eine erste und zweite bewegliche Platte anschließen, welche bündig mit einer feststehenden hinteren Platte ein Fahrzeugdach darstellen. Die erste und zweite Platte ist schräg stellbar sowie verschiebbar und unterhalb der feststehenden Platte einstellbar.

Die Aufgabe der Erfindung besteht darin, ein mehrteiliges Schiebedach für ein Kraftfahrzeug, insbesondere für einen Geländewagen zu schaffen, das eine Vielzahl von Möglichkeiten zur Dachöffnung und -schließung ergibt, wobei sowohl eine kleine Dachöffnung in verschiedenen Dachbereichen als auch eine relativ große Dachöffnung erzielbar ist, und es sollen die einzelnen Dachabschnitte in Dachholmen stabil abgestützt und geführt sein. Ferner soll die äußere Dachkontur bei geschlossenem Dach als durchgehende bündige Fläche ausgeführt sein und über die Dachkontur hinausragende Führungen vermieden werden.

Diese Aufgabe wird erfindungsgemäß durch die. Merkmale des Anspruchs 1 gelöst. Weitere vorteilhafte Merkmale beinhalten die Unteransprüche.

Die mit der Erfindung hauptsächlich erzielten Vorteile bestehen darin, dass durch eine mit den seitlichen Dachseitenholmen verbundene und verdeckt angeordnete Führungsschiene für die längs verschiebbaren Dachabschnitte bei geschlossenem Dach eine dachbündige Außenfläche ohne außenstehende Führung erzielt wird. Hierzu sind zwischen Seitenholmen des Fahrzeugdaches der Aufbaustruktur Führungsschienen vorgesehen, welche eine oder mehrere Aufnahmekammern für Verschiebe- und Stell- bzw. Betätigungselemente der drei vorn liegenden Dachabschnitte - in Bezug auf die Fahrtrichtung - aufweisen und unterhalb einer äußeren Dachkontur verdeckt angeordnet sind. Diese Führungsschienen sind jeweils mit den Seitenholmen der Aufbaustruktur verbunden, wobei die Aufnahmekammern in den Führungsschienen zur fixierten seitlichen Lagerung der Dachabschnitte, etwa in einer horizontalen Ebene nebeneinander angeordnet sind.

Das gesamte Dachmodul, im Wesentlichen bestehend aus den Dachabschnitten mit Führungsschienen sowie den Verschiebe- und Stell- bzw. Betätigungselementen und sonstigen zum funktionsfertigen Dachmodul gehörenden Elementen bzw. Einrichtungen wie E-Motoren und dgl. wird in eine vorbereitete Dachöffnung der Aufbaustruktur des Fahrzeuges eingesetzt und mit dieser beispielsweise durch Befestigungsschrauben oder durch Nietung oder mit einem anderen Verbindungsverfahren verbunden.

Die Führungschienen sind in vorteilhafter Weise so ausgebildet, dass am außen liegenden Profil der Führungsschiene eine etwa horizontal ausgerichteter und zur Fahrzeugaußenseite hinwegragender Steg vorgesehen ist, der zumindest mit einem Seitenholm der Fahrzeugaufbaustruktur über Schraubmittel verbindbar ist. Ebenso ist ein Auswechseln des gesamten Dachmoduls zur Reparatur oder bei Beschädigung in einfacher Weise möglich.

Zur Erzielung einer Vielzahl von Möglichkeiten zur Dachöffnung ist die Verschiebbarkeit und Schrägstellung der beweglichen Dachabschnitte in der Weise möglich, dass zumindest der erste Dachabschnitt bei Verstellung eines beweglichen zweiten oder dritten Dachabschnitts schräg verstellbar ist. Die beiden Dachabschnitte sind sowohl einzeln für sich und voneinander unabhängig als auch nacheinander über in den Führungsschienen verschiebbare Kulissen und Stellelemente in eine Freigabe- und Verschließposition verstellbar. Der zweite bzw. der dritte Dachabschnitt kann jeweils seine Dachöffnung, und in Folge können auch beide Dachabschnitte zusammen die gesamte Dachöffnung freigebend längs verschiebbar in den Führungsschienen angeordnet sein. Zumindest ein beweglicher Dachabschnitt oder auch beide Dachabschnitte sind in ihrer Verschließposition schräg anstellbar.

Damit die einzelnen Dachabschnitte längs verschiebbar zwischen den seitlichen Dachholmen sind, besteht die Führungsschiene aus zwei im Querschnitt annähernd U-förmigen Profilen, wobei das außenliegende Profil eine erste Kammer zur Aufnahme der Führungs- und Stell- bzw. Betätigungselemente für den ersten und den zweiten Dachabschnitt sowie zur Abstützung des vierten Dachabschnitts über Halte- und Befestigungsmittel aufweist. Das innen liegende Profil der Führungsschiene weist eine zweite Kammer zur Aufnahme von Führungs- und Stell- bzw. Betätigungselementen für den dritten Dachabschnitt sowie eine Führung für ein Sonnenrollo und eine Aufnahme zur Befestigung einer Dachverkleidung auf. Hierdurch werden aufwendige Anformungen und Ausbildungen von Profilen vermieden, weil diese Führung für das Sonnenrollo und die Aufnahme zur Befestigung de Dachverkleidung in die Führungsschiene integriert ist.

Die Längsverschieblichkeit der einzelnen Dachabschnitte erfolgt in der Weise, dass im außen liegenden Profil der Führungsschiene die Kulissen für den ersten Dachabschnitt und für den zweiten Dachabschnitt sowie in kreisförmigen Führungen Betätigungsseile längs verschiebbar geführt sind. In Führungsschlitzen der Kulisse greifen mit dem Dachabschnitt verbundene Kulissenzapfen ein, so dass eine Folgebewegung der Dachabschnitte bei einem Verschieben der Kulissen in einfacher Weise erfolgen kann.

Im innen liegenden Profil der Führungsschiene sind zwei fest miteinander verbundene Gleitelemente längs verschiebbar geführt, die mit Führungen eines am dritten Dachabschnitt verbundenen Stellelements in Eingriff stehen. Durch die Führungen wird es möglich, mittels der Gleitelemente bzw. der Stellelemente das Dach von einer Hubstellung in eine Längsverschiebestellung zu bewegen.

Durch die Ansteuerung der beweglichen Dachabschnitte mittels der Kulissen bzw. der Stellelemente, welche entsprechend dem gewünschten Bewegungsablauf Führungsschlitze bzw. Führungen aufweisen, in welche am Dachabschnitt befestigte Kulissenzapfen bzw. Stellelemente eingreifen, kann in einer ersten Öffnungsposition, der - in Bezug auf die Fahrtrichtung - vorn liegende zweite Dachabschnitt anschließend hinter der Windabweiserlamelle eine Dachöffnung in folgender Weise freigegeben werden.

Bei einer Freigabebewegung des zweiten Dachabschnitts führt dieser etwa eine schräge oder vertikal aufwärts gerichtete Hubbewegung durch, wobei sich eine entgegen der Fahrtrichtung gerichtete Längsbewegung anschließt und somit der zweite Dachabschnitt eine Lage oberhalb des dritten Dachabschnitts einnehmen kann und dieser dritte Dachabschnitt bündig mit dem vierten festen Dachabschnitt verbleibt. Der zweite Dachabschnitt kann auch über den vierten Dachabschnitt verfahren werden.

In einer zweiten Öffnungsposition wird bei einer Freigabebewegung des dritten Dachabschnitts eine vertikal abwärts gerichtete Hubbewegung durchgeführt, der sich eine anschließend entgegen der Fahrtrichtung gerichtete Längsbewegung anschließt; somit ist der dritte Dachabschnitt unterhalb des festen vierten Dachabschnitts verschiebbar. Der zweite Dachabschnitt verbleibt in seiner Position bündig mit dem vierten Dachabschnitt.

In einer dritten möglichen Öffnungsposition werden der zweite und der dritte Dachabschnitt gemeinsam oberhalb und unterhalb des festen vierten Dachabschnitts verschoben, wobei die vorn liegenden Stirnkanten aller drei Dachabschnitte annähernd in einer vertikalen Ebene übereinander liegen.

Die Schließbewegung der Dachabschnitte erfolgt entsprechend der Öffnungsbewegung, nur in umgekehrter Reihenfolge.

Der erste Dachabschnitt ist als sog. Windabweiserlamelle ausgeführt, die gegenüber den weiteren bewegbaren Dachabschnitten sehr viel schmäler ausgeführt ist. Insbesondere weisen die Dachabschnitte alle eine unterschiedliche Länge auf in der Weise, dass der vordere, als Windabweiserlamelle ausgebildete erste Dachabschnitt die geringste Länge gegenüber den weiteren Dachabschnitten besitzt und der zweite Dachabschnitt eine größere Länge als der dritte Dachabschnitt aufweist.

Die Dachabschnitte bestehen vorzugsweise aus einem transparenten Werkstoff bzw. sie können auch aus einem undurchsichtigen Werkstoff bestehen. Es ist aber auch möglich, wahlweise einige Dachabschnitte transparent und einige Dachabschnitt undurchsichtig auszuführen.

Die Dachabschnitte weisen zur Erzielung einer absoluten Dichtigkeit zwischen sich im Bereich der Stirnkanten jeweils gegenüberstehende Dichtleisten auf, wobei die eine Dichtleiste aus einem elastischen Hohlkammerprofil und die weitere gegenüber stehende Dichtleiste aus einer elastischen Vollleiste besteht. Unterhalb des Hohlkammerprofils kann jeweils ein mit einer quer verlaufenden Rinne versehenes Trägerprofil mit dem Dachabschnitt verbunden sein. Es sind auch andere elastische Profile denkbar.

Des weiteren sind seitliche Dichtungen vorgesehen, die am hoch ragenden Schenkel des außen liegenden Profils der Führungsschiene, insbesondere am freien Ende eine den Seitenkanten der Dachabschnitte zugerichtete Kammerprofildichtung aufweist, die im Bereich eines passierenden dachfesten Halteelements für den Kulissenzapfen wegdrückbar ist.

Die Führungsschiene bietet den Vorteil, dass einerseits Führungsbahnen für die beweglichen Dachabschnitte unterhalb der Dachkontur und in etwa der Höhe der Dachholme vorgesehen sind. Außerdem nehmen die Führungsschienen alle Mittel und Einrichtungen zur Verschiebung der Dachabschnitte auf. Des weiteren erfolgt die Anbringung an den Seitenholmen über die Führungsschienen und Seitendichtungen sowie Führungen für das Sonnenrollo und eine Aufnahme für den Dachverkleidung sind ebenfalls an der Schiene vorgesehen. Die Führungsschiene weiste eine nahezu glatte ebene Unterfläche auf und erstreckt sich mit geringer Breite in Fahrzeugquerrichtung, wodurch keine wesentlichen Beeinträchtigungen in der Größe der Dachöffnung eintritt und die Innenraumverhältnisse nicht wesentlich beeinträchtigt werden.

Ein Ausführungsbeispiel der Erfindung ist in den Zeichnungen dargestellt und wird im folgenden näher beschrieben.

Es zeigen
- Fig. 1 bis Fig. 8: die möglichen Öffnungs- und Schließstellungen der Dachabschnitte des mehrteiligen Schiebedaches,
- Fig. 9: eine Seitenansicht auf den ersten und teilweise auf den zweiten Dachabschnitt mit einer Kulisse für den ersten und Kulissen für den zweiten Dachabschnitt,
- Fig. 10: eine Seitenansicht auf den dritten Dachabschnitt mit Stell- und Gleitelementen,
- Fig. 11: einen Schnitt durch eine Führungsschiene mit angedeuteter Kulisse für den zweiten Dachabschnitt und einen angedeuteten Gleitstein mit Stellelement für den dritten Dachabschnitt,
- Fig. 12: einen Schnitt durch die Führungsschiene mit Befestigungsprofil für einen Dachhimmel und einer Führung für ein Sonnenrollo,
- Fig. 13: einen Schnitt durch die Führungsschiene mit einer Schraubverbindung an einem seitlichen Dachholm,
- Fig. 14: einen Schnitt durch die Führungsschiene mit einer Darstellung der Kulisse für den vorderen Dachabschnitt sowie Führungsverbindungen der Kulisse über einen Kulissenzapfen,
- Fig. 15: einen Schnitt durch einen vorderen, quer verlaufenden Dachholm und durch den ersten Dachabschnitt mit stirnseitiger Dichtung,
- Fig. 16: eine Seitenansicht auf die letzten drei übereinander angeordneten Dachabschnitte mit Dichtungen der vorderen Stirnkanten,
- Fig. 17: eine Seitenansicht auf eine Stirnkantendichtung vom dritten zum vierten Dachabschnitt in einer schräggestellten Position des dritten Dachabschnitts,
- Fig. 18: eine Seitenansicht gem. Fig. 17 bei geschlossener Position des dritten Dachabschnitts,
- Fig. 19: die vergrößerte Darstellung X gem. Fig. 10 des dachseitigen Stellelements mit Gleitelementen und
- Fig. 20: einen Schnitt durch einen heckseitigen, quer verlaufenden Dachholm mit Anbindung des festen hinteren Dachabschnitts.

Ein mehrteiliges Schiebedach 1 für ein Kraftfahrzeug bzw. für einen Geländewagen, umfasst mehrere Dachabschnitte D1, D2, D3 und D4. Der erste Dachabschnitt D1 ist vorzugsweise als Windabweiserlamelle ausgebildet und schräg verstellbar. Die beiden anschließenden Dachabschnitte D2 und D3 sind längs verschiebbar in seitlichen Führungsschienen 2 bzw. 3 angeordnet. An diese beiden Dachabschnitte D2 und D3 schließt sich der hintere feste Dachabschnitt D4 an. Die gesamte Baueinheit des mehrteiligen Schiebedaches 1 besteht aus einem funktionsfähigen Modul und wird in eine bereitgestellte Dachöffnung des Fahrzeugs eingesetzt und in dieser über Schraubmittel und dgl. befestigt.

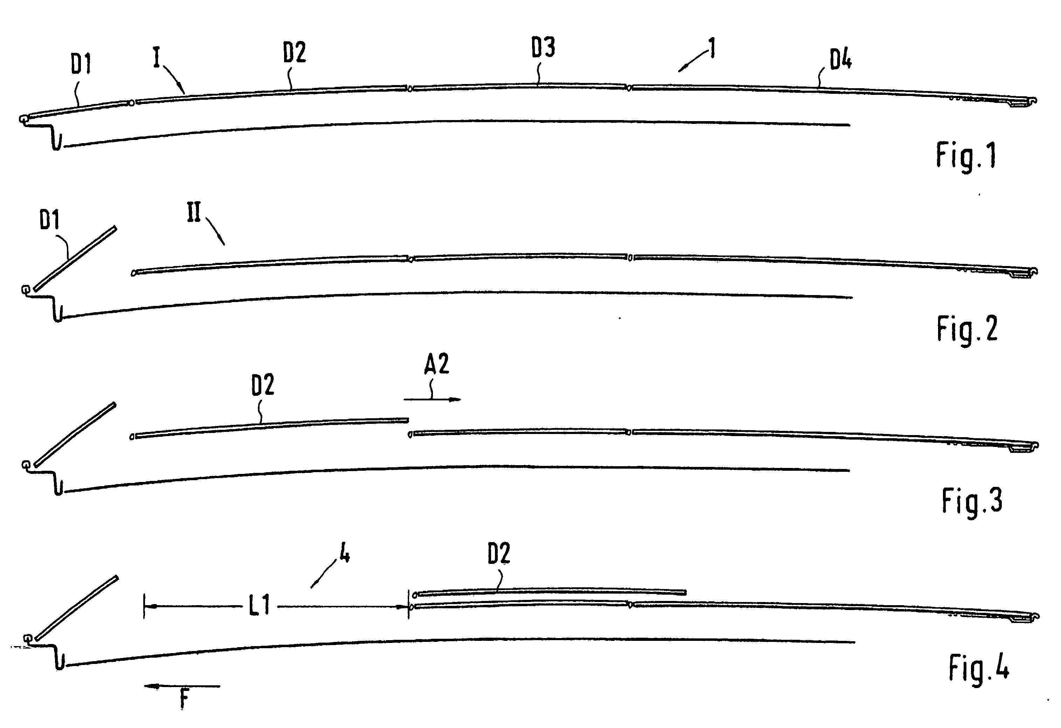

Wie in den Fig. 1 bis 8 näher dargestellt, können die längs verschiebbaren Dachabschnitte D2 und D3 unterschiedliche Schließ- bzw. Öffnungs- und Freigabepositionen I bis V einnehmen, was in den Fig. 1 bis 8 näher dargestellt ist.

In Fig. 1 ist das Schiebdach 1 mit den ersten drei beweglichen Dachabschnitten D1, D2 und D3 in geschlossener Position 1 gezeigt. Es besteht dann die Möglichkeit, den ersten Dachabschnitt D1 bei geschlossener Position der anschließenden Dachabschnitte D2 und D3 schräg aufzustellen. Es ist auch möglich, den ersten Dachabschnitt D1 bei annähernd oder vollständig geschlossenem zweiten und/oder dritten Dachabschnitt D2 und/oder D3 zu öffnen bzw. schräg zu stellen. Die beiden anschließenden beweglichen Dachabschnitte D2 und D3 sind einzeln für sich und unabhängig voneinander in eine Freigabe- und Verschließposition verstellbar.

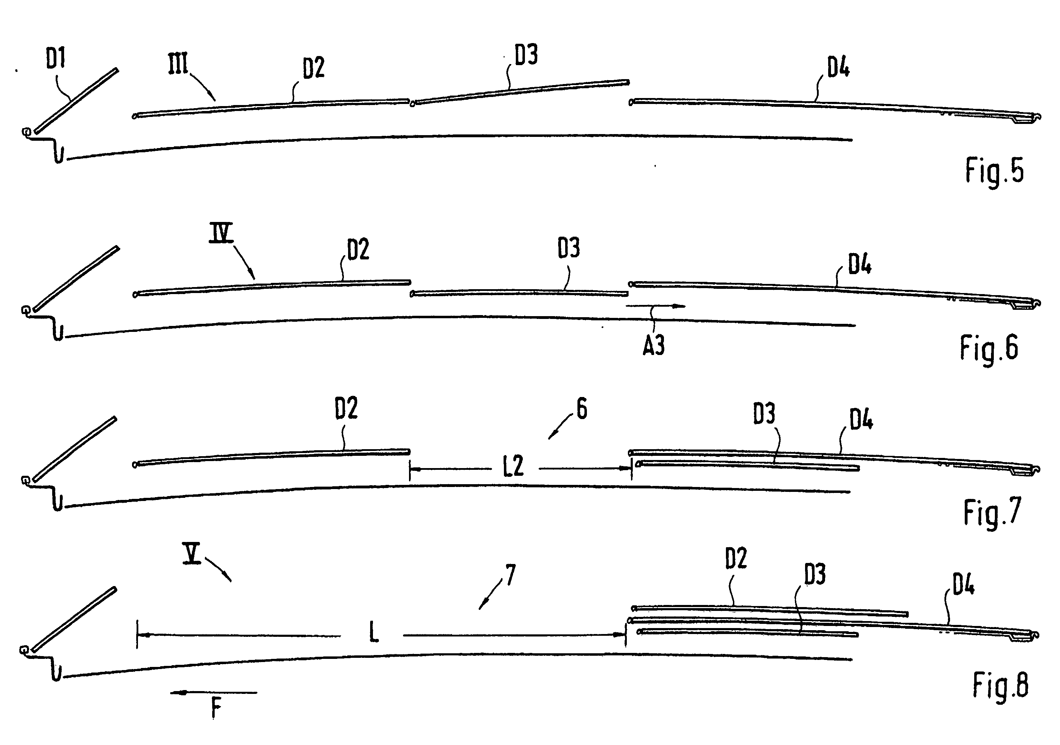

Wie in Fig. 3 näher dargestellt, kann der zweite Dachabschnitt D2 nach einer Längsverschiebung in Pfeilrichtung A2 seine Dachöffnung 4 mit der Länge L1 freigeben. Ebenso kann der dritte Dachabschnitt D3 nach einer Längsverschiebung in Pfeilrichtung A3 (Fig. 6) seine Dachöffnung 6 mit der Länge L2 freigeben. Des weiteren können die beiden beweglichen Dachabschnitte D2 und D3 entgegen der Fahrtrichtung F nach hinten verschoben werden, so dass sich eine Dachöffnung 7 mit der Länge L von der Länge der beiden Dachabschnitte D2 und D3 ergibt.

Der erste Dachabschnitt D1 ist nur schräg verstellbar, und vorzugsweise wird dieser Dachabschnitt D1 nur aufgestellt, wenn einer der beiden Dachabschnitte D2 und D3 in irgendeiner Weise bewegt wird. Eine Steuerung derart, dass diese Schrägverstellung des ersten Dachabschnittes D1 bei einer Bewegung der Dachabschnitte D2 und/oder D3 erfolgt, ist auch denkbar.

Eine Schrägverstellung des dritten Dachabschnitts D3 ist in Fig. 5 näher gezeigt. Möglich ist aber auch, dass beide Dachabschnitte D2 und D3 oder wahlweise einer der beiden Dachabschnitte D1 bzw. D2 oder D3 schräg verstellbar ist.

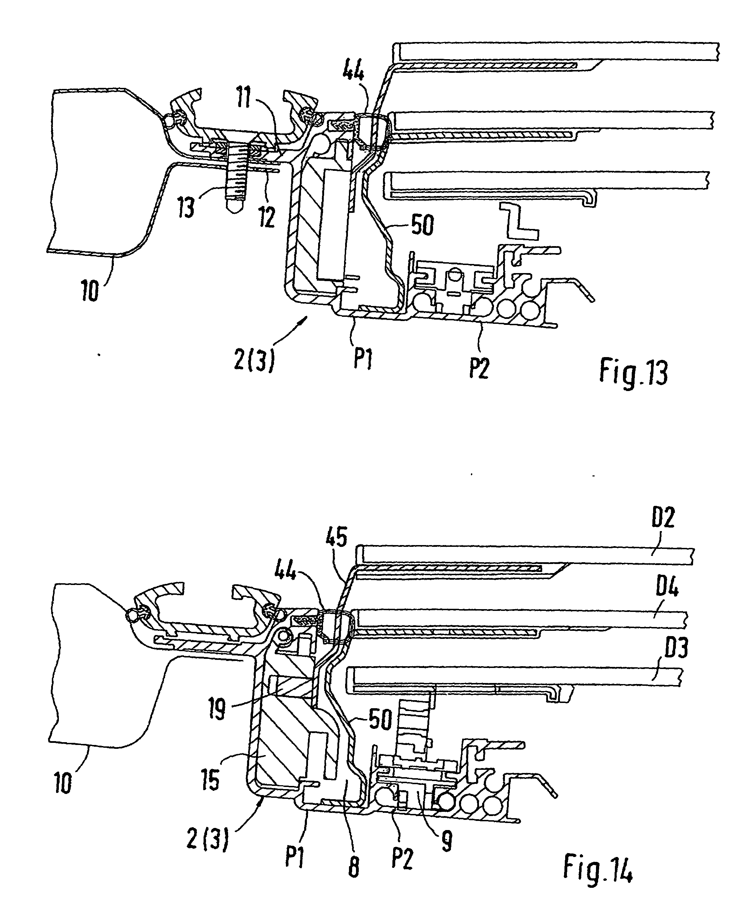

Damit eine entsprechende Öffnungsbewegung der bewegbaren Dachabschnitte D2 und D3 oberhalb und unterhalb des festen Dachabschnitts D4 in einfacher Weise möglich wird, weisen die seitlichen Führungsschienen 2 und 3 jeweils zwei U-förmige Profile P1 und P2 mit Aufnahmekammern 8 bzw. 9 für Verschiebe- und Stell- bzw. Betätigungselemente der Dachabschnitte D2 und D3 auf, was in Fig. 14 näher gezeigt ist.

Die eine Kammer 8 ist außenliegend und kann zur Aufnahme der Führungs- und Stell- bzw. Betätigungsmittel für den ersten und den zweiten Dachabschnitt D1 und D2 dienen. Dagegen ist die zweite Kammer 9 innenliegend kann zur Aufnahme zur Aufnahme von Führungs- und Stell- bzw. Betätigungsmittel für den dritten Dachabschnitt D3 dienen. Es ist somit möglich, die Führungs- und Stell- bzw. Betätigungsmittel der Dachabschnitte D1, D2 und D3 wahlweise in den Kammern 8 oder 9 anzuordnen.

Die Führungsschienen 2 und 3 sind unterhalb einer äußeren Dachkontur K verdeckt angeordnet und die Aufnahmekammern 8 bzw. 9 sind nebeneinanderliegend vorgesehen. Eine Verbindung der Führungsschiene 2 bzw. 3 mit der Aufbaustruktur des Fahrzeugs erfolgt über die Seitenholme 10 des Fahrzeugdaches.

Hierzu weisen die Führungsschienen 2 und 3 jeweils am außen liegenden Profil P1, welches die Kammer 8 bildet, einen etwa horizontal ausgerichteten und zur Fahrzeugaußenseite hin wegragenden Steg 11 auf, der zumindest oberhalb eines Stegs 12 des Seitenholmes 10 aufliegt. Eine Verbindung mit diesem erfolgt über Schraubmittel 13, was in Fig. 13 näher dargestellt ist.

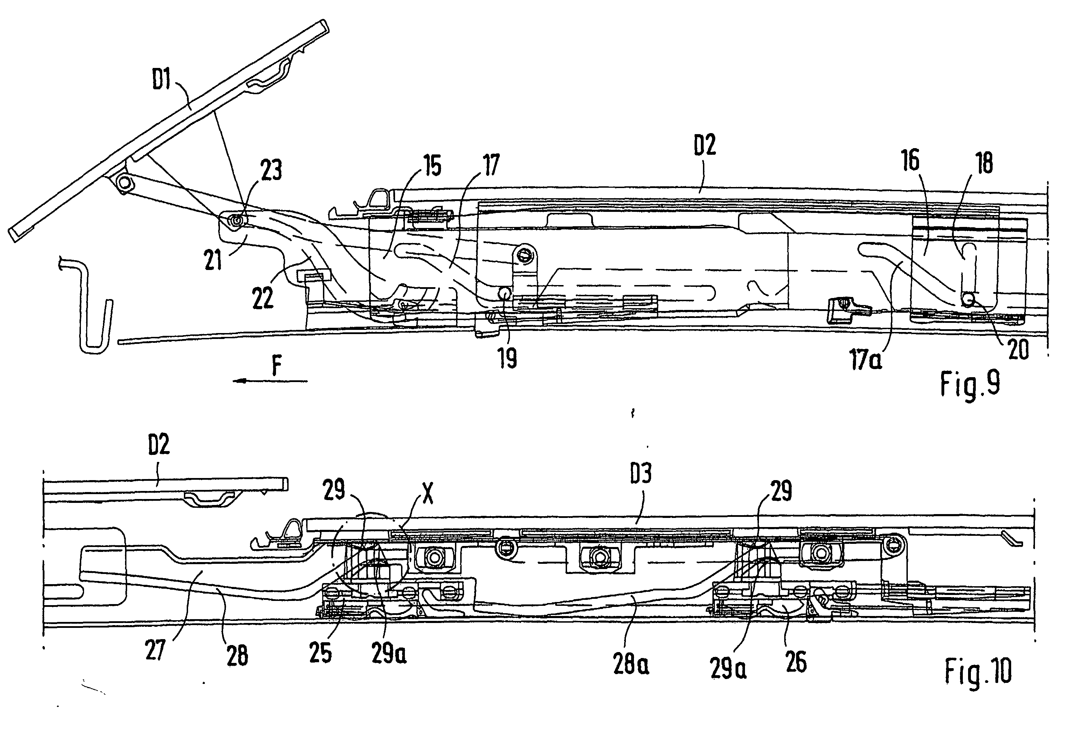

Die Stell- und Betätigungsmittel zum Anheben bzw. Absenken des bewegbaren Dachabschnitts D2 zum Freigeben und Schließen der Dachöffnung 4 und 7 bestehen aus in den Führungsschienen 2 und 3 verfahrbare Kulissen 15 bzw. 16 mit Führungsschlitzen 17, 17a und 18, in welche dachfeste Kulissenzapfen 19 bzw. 20 geführt sind (Fig. 9 und 14). Des weiteren ist eine Kulisse 21 für den ersten Dachabschnitt D1 vorgesehen, in deren Führungsschlitz 22 ein dachfester Kulissenzapfen 23 eingreift und die Schwenkbewegung des Dachabschnitts D1 steuert.

Die Steuerung der Windabweiserlamelle bzw. des ersten Dachabschnitts D1 erfolgt in der Weise, dass die Kulisse (15) des zweiten Dachabschnitts D2 sich entgegen der Fahrtrichtung F mit einem Leerweg bewegt und sich die Windabweiserlamelle bzw. der Dachabschnitt D1 verschwenkt, bevor sich der Dachabschnitt D2 in seine Öffnungsstellung bewegt. Nach Verfahren der Kulisse 15 gegen die Kulisse 16 erfolgt eine Hubbewegung, was in Fig. 2 näher dargestellt ist Danach werden die Kulissen 15 und 16 gemeinsam entgegen der Fahrtrichtung in der Führungsschiene 2 bzw. 3 verschoben.

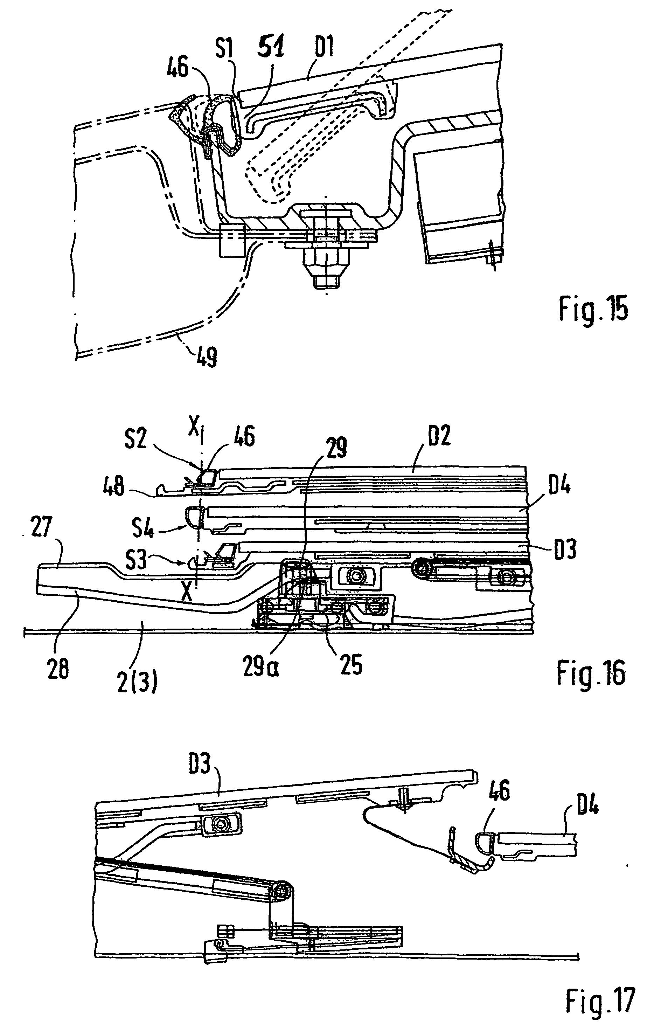

Im innen liegenden Profil P2 der Führungsschiene 2 bzw. 3 sind Gleitelemente 25 und 26 längs verschiebbar, welche mit einem Stellelement 27 des Dachabschnitts D3 verbunden sind (Fig. 10, 16 und 19). Die Gleitelemente 25 und 26 weisen eine erhabene Führungsschiene 28 bzw. 28a auf und werden von Gleitnocken 29 bzw. 29a umgriffen, so dass bei einer Verschiebung der Gleitelemente 25 und 26 entlang der Führungsschiene 28 eine Verstellung des Dachabschnitts D3 in vertikaler Absenkbewegung als auch eine Längsbewegung bewirkt wird.

In den Führungsschienen 2 und 3 sind mehrere kreisförmige Kanäle 30 vorgesehen, in denen Betätigunsseile oder dgl. Stellmittel angeordnet sind, welche die Kulisse 15 bzw. 16, 21 und die Gleitelemente 25 und 26 antreiben, um eine Schließ- oder Freigabestellung der Dachabschnitte D1, D2 und D3 zu erzielen.

Durch die in den Führungsschienen 2 und 3 verfahrbaren Kulissen und Stellelemente für die bewegbaren Dachabschnitte D1, D2 und D3 können die Dachabschnitte in folgende Positionen bewegt werden.

Bei einer Freigabebewegung des zweiten Dachabschnitts D2 erfolgt eine vertikal aufwärts gerichtete Hubbewegung dieses Dachabschnitts, dem eine anschließende entgegen der Fahrtrichtung F gerichtete Längsbewegung folgt. Der zweite Dachabschnitt D2 nimmt eine Lage oberhalb des dritten Dachabschnitts D3 ein, wobei dieser dritte Dachabschnitt D3 bündig mit dem vierten festen Dachabschnitt D4 angeordnet verbleibt

Bei einer Freigabewegung des dritten Dachabschnitts D3 erfolgt eine vertikal abwärts gerichtete Hubbewegung dieses Dachabschnitts, dem eine anschließende, entgegen der Fahrtrichtung F gerichtete Längsbewegung folgt. Der dritte Dachabschnitt D3 nimmt eine Lage unterhalb des festen vierten Dachabschnitts D4 ein, wobei der zweite Dachabschnitt D2 bündig mit dem vierten Dachabschnitt D4 in seiner Lage verbleibt.

Der zweite und der dritte Dachabschnitt D2 und D3 nehmen eine Lage oberhalb und unterhalb des festen vierten Dachabschnitts D4 ein, wobei die vorn liegenden Stirnkanten S2 bis S4 aller drei Dachabschnitte D2, D3 und D4 annähernd in einer vertikalen Ebene X-X übereinander liegen.

Der erste Dachabschnitt D1 bildet die Windabweiserlamelle und ist gegenüber den weiteren Dachabschnitten relativ schmal ausgeführt. Die Dachabschnitte können jeweils unterschiedliche Längen aber auch gleiche Längen derart aufweisen, dass sich eine größtmögliche Öffnung durch die Dachabschnitte D2 und D3 ergibt.

Insbesondere können alle Dachabschnitte D1, D2, D3 und D4 aus einem transparenten durchsichtigen Material, wie beispielsweise Glas, bestehen. Denkbar ist auch ein undurchsichtiger Werkstoff, wie beispielsweise Blech, Kunststoff oder dgl. Ein Mischbauweise aus transparenten und undurchsichtigen Dachabschnitten ist ebenfalls möglich.

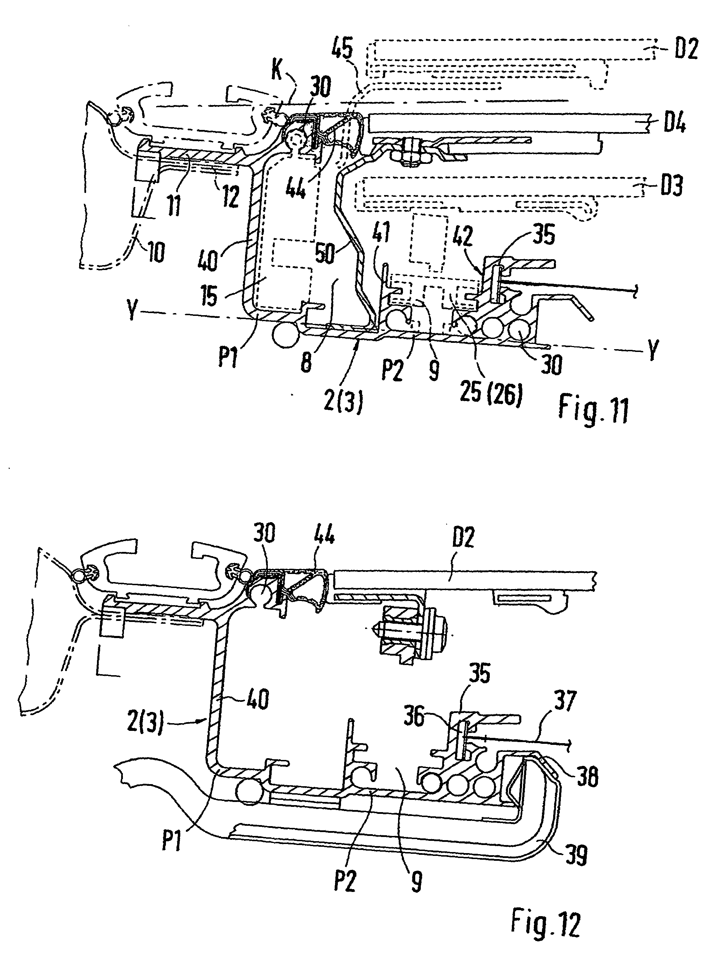

Das innen liegende Profil P2 der Führungsschiene 2 bzw. 3 weist profilierte Anformungen 35 nach Art einer Nut 36 auf, in der ein Sonnenrollo 37 seitlich geführt ist. Eine weitere profilierte Anformung 38, dient zur Festlegung eines Dachverkleidung 39 (Fig. 12).

Die Führungsschiene 2 bzw. 3 ist, wie Fig. 11 zeigt, an dem außen liegenden Profil P1 mit einem hochragenden Schenkel 40 (Fig. 11) versehen, der sich zumindest seitlich der Seitenkanten der Dachabschnitte D1, D2, D3 und D4 erstreckt, wobei die weiteren Schenkel 41 und 42 der Profile P1 und P2 sich unterhalb der Dachabschnitte D2, D3 und D4 befinden.

In einer vorteilhaften Ausgestaltung weist der hochragende Schenkel 40 des außen liegenden Profils P1 der Führungsschiene 2 bzw. 3 am freien Ende eine den Seitenkanten S2, S3 und S4 der Dachabschnitte D2, D3 bzw. D4 zugerichtete Kammerprofildichtung 44 auf, die im Bereich eines passierenden dachfesten Halteelements 45 für den Kulissenzapfen 19 wegdrückbar ist. Vor und hinter dieser Dichtung legt sich das Kammerprofil wieder an die Seitenkanten an, so dass eine Dichtigkeit erzielt wird.

Zwischen den Dachabschnitten D1, D2, D3 und D4 im Bereich der Stirnkanten S2, S3 bzw. S4 sind jeweils gegenüberstehende Dichtleisten 46 und 47 angeordnet. Die eine Dichtleiste 46 besteht aus einem elastischen Hohlkammerprofil und die weitere gegenüberstehende Dichtleiste 47 kann aus einer elastischen Vollleiste bestehen. Unterhalb des Hohlkammerprofils ist jeweils ein mit einer quer verlaufenden Rinne versehenes Trägerprofil 48 mit dem Dachabschnitt D2, D3 bzw. D4 verbunden.

Am vorderen quer verlaufenden Dachholm 49 der Aufbaustruktur des Fahrzeugs ist beispielsweise eine aus einem Hohlkammerprofil bestehende Dichtleiste 46 angeordnet, die korrespondierend mit einer Dichtleiste 51 an der vorderen Stirnkante S1 des ersten Dachabschnitts D1 angeordnet ist. Dieses Hohlkammerprofil bewirkt eine Abdichtung des vorderen Dachabschnitts bei einer geschlossenen Stellung, wobei bei geöffneter Stellung das vordere freie Ende des Dachabschnitts D1 in eine querverlaufende Schiene eintaucht.

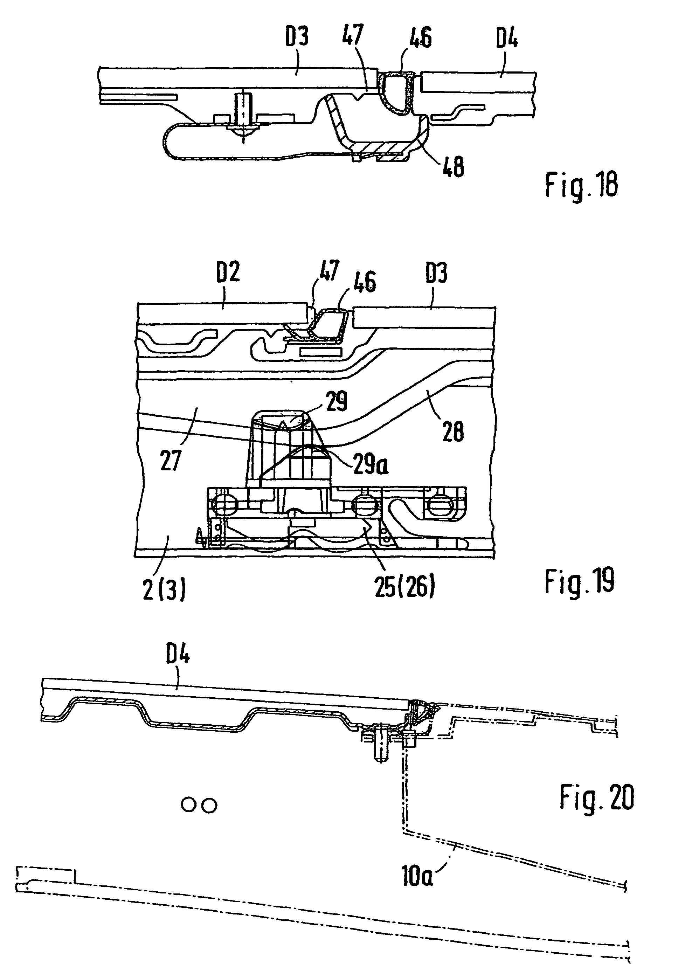

In Fig. 20 ist der hintere feste Dachabschnitt D4 in seiner Befestigung am hinteren quer verlaufenden Dachholm 10a dargestellt. Dieser feste Dachabschnitt D4 ist über Halte- bzw. Befestigungsmittel 50 einerseits mit der Führungsschiene 2 bzw. 3 im Profil P1 bodenseitig verbunden und andererseits ist eine Verbindung am Dachholm 10a vorgesehen. Hierdurch wird eine wesentliche Erhöhung der Rohbausteifigkeit erzielt, weil der feste Dachabschnitt D4 unmittelbar in die Aufbaustruktur eingebunden wird.

## Patentansprüche

1. Mehrteiliges Schiebedach (1) für ein Kraftfahrzeug mit einem ersten winkelbeweglichen Dachabschnitt (D1) und mindestens einem zweiten und dritten in Fahrzeuglängsrichtung bewegbaren Dachabschnitt (D2, D3) zum positionierten Verschließen und Freigeben einer Dachöffnung (F) und einen an diese bewegbaren Dachabschnitte anschließenden vierten festen Dachabschnitt (D4), wobei die längs bewegbaren Dachabschnitte in Führungsschienen (2, 3) mittels Stell- Verschiebe- und Betätigungselementen angesteuert verfahrbar sind, wobei der erste Dachabschnitt (D1) zu dem einen positionierten beweglichen zweiten oder dritten Dachabschnitt (D2, D3) schräg stellbar ist und die anschließenden Dachabschnitte (D2, D3) sowohl einzeln für sich und voneinander unabhängig als auch nacheinander über in den Führungsschienen (2, 3) verschiebbare Kulissen (15, 16) und über die Stellelemente (27) in eine Freigabe- und Verschließposition verstellbar sind, derart, dass der zweite und der dritte Dachabschnitt (D2, D3) jeweils seine Dachöffnung (4, 6) und infolge beide Dachabschnitte (D2, D3) zusammen die gesamte Dachöffnung (7) freigebend längs verschiebbar in den Führungsschienen (2, 3) angeordnet sind und zumindest ein beweglicher Dachabschnitt (D2, D3) oder beide Dachabschnitte (D2, D3) in der Verschließposition schräg stellbar ist bzw. sind, **dadurch gekennzeichnet. dass** die Führungsschienen (2, 3) aus zwei im Querschnitt annähernd U-förmigen Profilen (P1, P2) bestehen, wobei das außen liegende Profil (P1) die erste Kammer (8) zur Aufnahme der Führungs- und Stell- bzw. Betätigungsmittel für den ersten und den zweiten Dachabschnitt (D1, D2) sowie zur Abstützung des vierten festen Dachabschnitts (D4) über Halte- und Befestigungsmittel (50) aufweist und dass am außen liegenden Profil (P1) der Führungsschiene (2, 3) ein etwa horizontal ausgerichteter und zur Fahrzeugaußenseite hin wegragender Steg (11) vorgesehen ist, der zumindest mit einem Seitenholm (10) der Fahrzeugaufbaustruktur über Schraubmittel (13) verbindbar ist.

2. Schiebedach nach Anspruch 1, **dadurch gekennzeichnet, dass** bei einer Freigabebewegung des zweiten Dachabschnitts (D2) eine vertikal aufwärts gerichtete Hubbewegung mit einer anschließenden, entgegen der Fahrtrichtung (F) gerichteten Längsbewegung gekoppelt ist und der zweite Dachabschnitt (D2) eine Lage oberhalb des dritten Dachabschnitts (D3) oder vierten Dachabschnitts (D4) aufweist und dieser dritte Dachabschnitt (D3) bündig mit dem vierten festen Dachabschnitt (D4) angeordnet ist.

3. Schiebedach nach Anspruch 1 oder 2, **dadurch gekennzeichnet, dass** bei einer Freigabebewegung des dritten Dachabschnitts (D3) eine vertikal abwärts gerichtete Hubbewegung mit einer anschließend entgegen der Fahrtrichtung (F) gerichteten Längsbewegung gekoppelt ist und der dritte Dachabschnitt (D3) unterhalb des festen vierten Dachabschnitts (D4) verschiebbar ist, wobei der zweite Dachabschnitt (D2) bündig mit dem vierten Dachabschnitt (D4) angeordnet ist.

4. Schiebedach nach einem der Ansprüche 1, 2 oder 3, **dadurch gekennzeichnet, dass** der zweite und der dritte Dachabschnitt (D2, D3) gemeinsam oberhalb und unterhalb des festen vierten Dachabschnitts (D4) verschiebbar sind, wobei die vorn liegenden Stirnkanten (S2-S4) aller drei Dachabschnitte (D2, D3, D4) annähernd in einer vertikalen Ebene (X-X) übereinander liegen.

5. Schiebedach nach einem der Ansprüche 1 bis 4, **dadurch gekennzeichnet, dass** zwischen Seitenholmen (10) des Fahrzeugdachs der Aufbaustruktur die Führungsschienen (2, 3) mindestens jeweils zwei profilierte Aufnahmekammern (8, 9) für die Verschiebe- und Stell- bzw. Betätigungselemente (15, 16, 21, 25 29) der Dachabschnitte (D1, D2, D3) aufweisen und unterhalb einer äußeren Dachkontur (K) verdeckt angeordnet und jeweils mit den Seitenholmen (10) der Aufbaustruktur verbunden sind, wobei die Aufnahmekammern (8, 9) der Führungsschienen (2, 3) zur fixierten seitlichen Lagerung der Dachabschnitte (D1 bis D4) etwa in einer horizontalen Ebene (Y-Y) nebeneinander liegend angeordnet sind.

6. Schiebedach nach einem der vorhergehenden Ansprüche, **dadurch gekennzeichnet, dass** das aus den vier Abschnitten (D1, D2, D3, D4) bestehende Fahrzeugdach mit den seitlichen Führungsschienen (2, 3) sowie den Verschiebe- und Stell- bzw. Betätigungselementen (15, 16, 21, 25 29) ein in eine Dachöffnung als vorgefertigte Baueinheit einsetzbares Funktionsmodul besteht, welches mit vorderen, hinteren und seitlichen Dachholmen (49, 10, 10a) der Fahrzeugaufbaustruktur verbindbar ist..

7. Schiebedach nach einem der Ansprüche 1 bis 6, **dadurch gekennzeichnet, dass** das innen liegende Profil (P2) der Führungsschiene (2, 3) die zweite Kammer (9) zur Aufnahme von Führungs- und Stell- bzw. Betätigungsmitteln für den dritten Dachabschnitt (D3) aufweist.

8. Schiebedach nach einem der Ansprüche 1 bis 7, **dadurch gekennzeichnet, dass** die Kammern (8, 9) wahlweise zur Aufnahme der Führungs- und Stell- bzw. Betätigungsmittel für den ersten und den zweiten Dachabschnitt (D1, D2) und wahlweise zur Aufnahme von Führungs- und Stell- bzw. Betätigungsmitteln für den dritten Dachabschnitt (D3) aufweist.

9. Schiebedach nach einem der vorhergehenden Ansprüche, **dadurch gekennzeichnet, dass** die Führungsschiene (2, 3) eine Führung (35) für ein Sonnenrollo (37) und eine Aufnahme (38) zur Befestigung einer Dachverkleidung (39) aufweist.

10. Schiebedach nach einem der vorhergehenden Ansprüche, **dadurch gekennzeichnet, dass** das außen liegende Profil (P1) der Führungsschiene (2, 3) die Dachabschnitte (D2, D3, D4) mit einem hochragenden Schenkel (40) teilweise seitlich übergreift,
wobei das innen liegende Profil (P2) im Wesentlichen unterhalb der Dachabschnitte (D2, D3, D4) angeordnet ist.

11. Schiebedach nach einem der vorhergehenden Ansprüche, **dadurch gekennzeichnet, dass** im außen liegenden Profil (P1) der Führungsschiene (2, 3), die Kulissen (21, 15, 16) für den ersten Dachabschnitt (D1) bzw. für den zweiten Dachabschnitt (D2) sowie in kreisförmigen Führungen (30) Betätigungsseile längs verschiebbar geführt sind und in Führungsschlitzen (22, 17, 17a) der Kulisse (21, 15, 16) mit dem ersten und zweiten Dachabschnitt (D1, D2) verbundene Kulissenzapfen (23, 19, 20) eingreifen.

12. Schiebedach nach einem der vorhergehenden Ansprüche, **dadurch gekennzeichnet, dass** im innen liegenden Profil (P2) der Führungsschiene (2, 3) zwei miteinander verbundene Gleitelemente (25, 26) längs verschiebbar geführt sind, die mit Führungen (28, 28a) eines am dritten Dachabschnitt (D3) verbundenen Stellelements (29, 29a) in Eingriff stehen.

13. Schiebedach nach einem der Ansprüche 13 bis 15, **dadurch gekennzeichnet, dass** der hoch ragende Schenkel (40) des außen liegenden Profils (P1) der Führungsschiene (2, 3) am freien Ende eine den Seitenkanten (S2, S3, S4) der Dachabschnitte (D2, D3, D4) zugerichtete Kammerprofildichtung (44) aufweist, die im Bereich eines passierenden dachfesten Halteelements (45) zumindest für den Kulissenzapfen (19) wegdrückbar ist.

14. Schiebedach nach einem der vorhergehenden Ansprüche, **dadurch gekennzeichnet, dass** zwischen den Dachabschnitten (D1, D2, D3, D4) im Bereich der Stirnkanten (S2, S3, S4) jeweils gegenüberstehende Dichtleisten (46, 47) angeordnet sind, wobei die eine Dichtleiste (46) aus einem elastischen Hohlkammerprofil und die weitere gegenüberstehende Dichtleiste (47) aus einer elastischen Vollleiste besteht und unterhalb des Hohlkammerprofils jeweils ein mit einer quer verlaufenden Rinne versehenes Trägerprofil (48) mit den Dachabschnitten (D2, D3, D4) verbunden ist.

## Claims

1. A multiple-part sliding roof (1) for a motor vehicle with a first roof portion **(D1)** movable in an angular manner and at least one second and third roof portion **(D2, D3)** movable in the longitudinal direction of the vehicle for the positioned closing and release of a roof opening (**F**) and a fourth fixed roof portion (**D4**) adjoining the said movable roof portions, wherein the roof portions movable longitudinally are capable of being moved in a controlled manner in guide rails (2, 3) by means of setting, displacement and actuating elements, wherein the first roof portion **(D1)** is capable of being set in an oblique manner with respect to one positioned movable second or third roof portion **(D2, D3)** and the adjoining roof portions (**D2, D3**) are capable of being displaced into a release and closed position both individually in themselves and independently of each other and in successsion by way of slide blocks (15, 16) displaceable in the guide rails (2, 3) and by way of the setting elements (27), in such a way that the second and the third roof portion (**D2, D3**) are arranged in a longitudinally displaceable manner in the guide rails (2, 3) so as to release their respective roof opening (4, 6) in each case and as a result [of] the two roof portions (**D2, D3**) together to release the entire roof opening (7), and at least one movable roof portion (**D2, D3**) or the two roof portions (**D2, D3**) is or are capable of being set in an oblique manner in the closed position, **characterized in that** the guide rails (2, 3) comprise two profiled sections **(P1, P2)** substantially U-shaped in cross-section, wherein the profiled section **(P1)** situated on the outside has the first chamber (8) for receiving the guiding and setting or actuating means for the first and the second roof portion **(D1, D2)** as well as for supporting the fourth fixed roof portion **(D4)** by way of retaining and fastening means (50), and a web (11), which is orientated substantially horizontally and projects away towards the outside of the vehicle and which is capable of being connected at least to one side member (10) of the vehicle body structure by means of screws (13), is provided on the profiled section **(P1)** of the guide rail (2, 3) situated on the outside.

2. A sliding roof according to Claim 1, **characterized in that** during a release movement of the second roof portion (**D2**) a stroke movement directed vertically upwards is linked to a subsequent longitudinal movement directed contrary to the direction of travel (**F**), and the second roof portion (**D2**) occupies a position above the third roof portion (**D3**) or the fourth roof portion (**D4**) and the said third roof portion (**D3**) is arranged flush with the fourth fixed roof portion (**D4**).

3. A sliding roof according to Claim 1 or 2, **characterized in that** during a release movement of the third roof portion (**D3**) a stroke movement directed vertically downwards is linked to a longitudinal movement subsequently directed contrary to the direction of travel (**F**), and the third roof portion (**D3**) is capable of being displaced below the fixed fourth roof portion (**D4**), wherein the second roof portion (**D2**) is arranged flush with the fourth roof portion (**D4**).

4. A sliding roof according to one of Claims 1, 2 or 3, **characterized in that** the second and the third roof portion (**D2, D3**) are capable of being displaced jointly above and below the fixed fourth roof portion **(D4),** wherein the front edges **(S2 - S4) -** arranged forwards - of all three roof portions (**D2, D3, D4**) are arranged one above the other substantially in a vertical plane (X-X).

5. A sliding roof according to one of Claims 1 to 4, **characterized in that** between side members (10) of the vehicle roof of the body structure the guide rails (2, 3) have at least two profiled receiving chambers (8, 9) in each case for the displacement and setting or actuating elements respectively (15, 16, 21, 25 - 29) of the roof portions **(D1, D2, D3),** and they are arranged in a covered manner below an external roof profile **(K)** and are connected to the side members (10) of the body structure in each case, wherein the receiving chambers (8, 9) of the guide rails (2, 3) for the fixed lateral mounting of the roof portions (**D1** to **D4**) are arranged adjacent to each other substantially in a horizontal plane (**Y-Y**).

6. A sliding roof according to one of the preceding Claims, **characterized in that** the vehicle roof comprising the four portions **(D1, D2, D3, D4)** with the lateral guide rails (2, 3) as well as the displacement and setting or actuating elements respectively (15, 16, 21, 25 - 29) comprises a functional module which is capable of being inserted as a prefabricated structural unit into a roof opening and which is capable of being connected to front, rear and lateral roof pillars (49, 10, 10a) of the vehicle body structure.

7. A sliding roof according to one of Claims 1 to 6, **characterized in that** the profiled section (**P2**) of the guide rail (2, 3) situated on the inside has the second chamber (9) for receiving guiding and setting or actuating means for the third roof portion (**D3**).

8. A sliding roof according to one of Claims 1 to 7, **characterized in that** ... has the chambers (8, 9) optionally for receiving the guiding and setting or actuating means respectively for the first and the second roof portion **(D1, D2)** and optionally for receiving guiding and setting or actuating means respectively for the third roof portion (**D3**).

9. A sliding roof according to one of the preceding Claims, **characterized in that** the guide rail (2, 3) has a guide (35) for a sun shade (37) and a receiving means (38) for fastening a roof lining (39).

10. A sliding roof according to one of the preceding Claims, **characterized in that** the profiled section **(P1)** of the guide rail (2, 3) situated on the outside engages laterally in part over the roof portions **(D2, D3, D4)** with an arm (40) projecting upwards, wherein the profiled section (**P2**) situated on the inside is situated substantially below the roof portions (**D2, D3, D4**).

11. A sliding roof according to one of the preceding Claims, **characterized in that** the slide blocks (21, 15, 16) for the first roof portion **(D1)** and for the second roof portion **(D2)** respectively are guided so as to be longitudinally displaceable in the profiled section **(P1)** of the guide rail (2, 3) situated on the outside and actuating cables are guided so as to be longitudinally displaceable in circular guides (30), and slide-block pins (23, 19, 20) connected to the first and the second roof portion **(D1, D2)** engage in guide slots (22, 17, 17a) in the slide block (21, 15, 16).

12. A sliding roof according to one of the preceding Claims, **characterized in that** two slide elements (25, 26), which are connected together and which engage with guides (28, 28a) of a setting element (29, 29a) connected to the third roof portion (**D3**), are guided so as to be longitudinally displaceable in the profiled section (**P2**) of the guide rail (2, 3) situated on the inside.

13. A sliding roof according to one of Claims 13 to 15 [sic], **characterized in that** the free end of the arm (40) - projecting upwards - of the profiled section **(P1)** of the guide rail (2, 3) situated on the outside has a cellular-section seal (44) which is directed towards the lateral edges **(S2, S3, S4)** of the roof portions **(D2, D3, D4)** and which is capable of being pressed away in the region of a passing retaining element (45) fixed to the roof at least for the slide-block pin (19).

14. A sliding roof according to one of the preceding Claims, **characterized in that** opposed sealing strips (46, 47) are arranged in each case between the roof portions **(D1, D2, D3, D4)** in the region of the front edges **(S2, S3, S4),** wherein one sealing strip (46) comprises a resilient hollow cellular section and the other opposite sealing strip (47) comprises a resilient solid strip, and below the hollow cellular section a support profiled section (48) provided with a transversely extending channel is connected to the roof portions (**D2, D3, D4**) in each case.

## Revendications

1. Toit coulissant (1) en plusieurs parties pour un véhicule automobile, comportant un premier tronçon de toit (D1) déplaçable angulairement et au moins un deuxième ainsi qu'un troisième tronçon de toit (D2, D3) déplaçable dans la direction longitudinale du véhicule pour la fermeture et le dégagement positionnés d'une ouverture de toit (F) ainsi qu'un quatrième tronçon de toit (D4) fixe se raccordant à ces tronçons de toit déplaçables, les tronçons de toit déplaçables longitudinalement dans des rails de guidage (2, 3) pouvant être déplacés de manière commandée, au moyen d'éléments de réglage, de coulissement et d'actionnement, le premier tronçon de toit (D1) pouvant être placé obliquement par rapport à l'un du deuxième ou troisième tronçon de toit (D2, D3) mobile, positionné, et les tronçons de toit (D2, D3) s'y raccordant pouvant être déplacés individuellement et indépendamment l'un de l'autre ainsi que l'un après l'autre, dans une position de dégagement et une position de fermeture, par des coulisses (15, 16) pouvant coulisser dans les rails de guidage (2, 3), et par les éléments de réglage (27), de manière que le deuxième et le troisième tronçon de toit (D2, D3) soient disposés de façon à pouvoir coulisser longitudinalement dans les rails de guidage (2, 3), en dégageant chacun son ouverture de toit (4, 6) et, par la suite, les deux tronçons de toit (D2, D3) dégageant ensemble toute l'ouverture de toit (7), et qu'au moins un tronçon de toit (D2, D3) mobile ou les deux tronçons de toit (D2, D3) puisse(nt) être placé(s) obliquement dans la position de fermeture, **caractérisé en ce que** les rails de guidage (2, 3) sont constitués de deux profilés (P1, P2) de section transversale approximativement en U, le profilé (P1) situé à l'extérieur présentant la première chambre (8) pour recevoir les moyens de guidage ou de réglage ou d'actionnement du premier et du deuxième tronçon de toit (D1, D2) ainsi que pour soutenir le quatrième tronçon de toit (D4) fixe par des moyens de maintien et de fixation (50) et **en ce que**, sur le profilé (D1) situé à l'extérieur du rail de guidage (2, 3) est prévue une patte (11) orientée à peu près horizontalement et dirigée vers le côté extérieur du véhicule, laquelle peut être reliée par des moyens à vis (13) au moins avec un longeron latéral (10) de la structure de la carrosserie du véhicule.

2. Toit coulissant selon la revendication 1, **caractérisé en ce que** lors d'un mouvement de dégagement du deuxième tronçon de toit (D2), un mouvement de translation dirigé verticalement vers le haut est couplé à un mouvement longitudinal consécutif, dirigé dans le sens contraire au sens de marche (F), et le deuxième tronçon de toit (D2) présente une position au-dessus du troisième tronçon de toit (D3) ou du quatrième tronçon de toit (D4), et ce troisième tronçon de toit (D3) affleure le quatrième tronçon de toit (D4) fixe.

3. Toit coulissant selon la revendication 1 ou 2, **caractérisé en ce que** lors d'un mouvement de dégagement du troisième tronçon de toit (D3), un mouvement de translation dirigé verticalement vers le bas est couplé à un mouvement longitudinal dirigé ensuite dans le sens contraire au sens de marche (F) et le troisième tronçon de toit (D3) peut coulisser au-dessous du quatrième tronçon de toit (D4) fixe, le deuxième tronçon de toit (D2) étant disposé à affleurement du quatrième tronçon de toit (D4).

4. Toit coulissant selon l'une des revendications 1, 2 ou 3, **caractérisé en ce que** le deuxième et le troisième tronçon (D2, D3) peuvent coulisser ensemble au-dessus et au-dessous du quatrième tronçon de toit (D4) fixe, les bords frontaux (S2-S4) situés à l'avant des trois tronçons de toit (D2, D3, D4) étant approximativement superposés dans un plan vertical (X-X).

5. Toit coulissant selon l'une des revendications 1 à 4, **caractérisé en ce qu'**entre des longerons latéraux (10) du toit de véhicule de la structure de la carrosserie, les rails de guidage (2, 3) présentent chacun au moins deux chambres de réception (8, 9) profilées pour les éléments de coulissement et de réglage ou d'actionnement (15, 16, 21, 25-29) des tronçons de toit (D1, D2, D3), et sont disposées dissimulées au-dessous d'un contour de toit (K) extérieur, et sont reliées chacune aux longerons latéraux (10) de la structure de la carrosserie, les chambres de réception (8, 9) des rails de guidage (2, 3) étant disposées reposant côte à côte sensiblement dans un plan horizontal (Y-Y) pour le support latéral fixe des tronçons de toit (D1 à D4).

6. Toit coulissant selon l'une des revendications précédentes, **caractérisé en ce que** le toit de véhicule, constitué des quatre tronçons (D1, D2, D3, D4) constitue, avec les rails de guidage (2, 3) latéraux ainsi qu'avec les éléments de coulissement et de réglage ou d'actionnement (15, 16, 21, 25-29), un module fonctionnel pouvant être inséré dans une ouverture de toit, en tant qu'unité de construction préfabriquée, lequel peut être relié à des longerons de toit (49, 10, 10a) avant, arrière et latéraux de la structure de la carrosserie du véhicule.

7. Toit coulissant selon l'une des revendications 1 à 6, **caractérisé en ce que** le profilé (P2) situé à l'intérieur du rail de guidage (2, 3) comporte la deuxième chambre (9) destinée à recevoir des moyens de guidage et de réglage ou d'actionnement pour le troisième tronçon de toit (D3).

8. Toit coulissant selon l'une des revendications 1 à 7, **caractérisé en ce que** les chambres (8, 9) sont conçues pour recevoir au choix les moyens de guidage et de réglage ou d'actionnement du premier et du deuxième tronçons de toit (D1, D2) et pour recevoir au choix des éléments de guidage et de réglage ou d'actionnement du troisième tronçon de toit (D3).

9. Toit coulissant selon l'une des revendications précédentes, **caractérisé en ce que** le rail de guidage (2, 3) comporte un guide (35) pour un store pare-soleil (37) et un logement (38) pour la fixation d'un habillage de toit (39).

10. Toit coulissant selon l'une des revendications précédentes, **caractérisé en ce que** le profilé (P1) situé à l'extérieur du rail de guidage (2, 3) surmonte en partie latéralement les tronçons de toit (D2, D3, D4), par une aile (40) dirigée vers le haut, le profilé (P2) situé à l'intérieur étant disposé sensiblement au-dessous des tronçons de toit (D2, D3, D4).

11. Toit coulissant selon l'une des revendications précédentes, **caractérisé en ce que** dans le profilé (P1) situé à l'extérieur du rail de guidage (2, 3), les coulisses (21, 15, 16) pour le premier tronçon de toit (D1) ou pour le deuxième tronçon de toit (D2), ainsi que, dans des guides (30) de forme circulaire, des câbles d'actionnement, sont guidés de manière à pouvoir coulisser longitudinalement, et s'engagent dans des fentes de guidage (22, 17, 17a) de la coulisse (21, 15, 16) par des doigts de coulisse (23, 19, 20) reliés au premier et au deuxième tronçons de toit (D1, D2).

12. Toit coulissant selon l'une des revendications précédentes, **caractérisé en ce que** dans le profilé (P2) situé à l'intérieur du rail de guidage (2, 3) sont guidés, de manière à pouvoir coulisser longitudinalement, deux éléments glissants (25, 26) reliés entre eux, qui sont en prise avec des guides (28, 28a) d'un élément de réglage (29, 29a) relié au troisième tronçon de toit (D3).

13. Toit coulissant selon l'une des revendications 13 à 15, **caractérisé en ce que** l'aile (40), dirigée vers le haut, du profilé (P1) situé à l'extérieur, du rail de guidage (2, 3), présente, à l'extrémité libre, une garniture d'étanchéité (44) du profilé à chambre, orientée vers les bords latéraux (S2, S3, S4) des tronçons de toit (D2, D3, D4), laquelle garniture d'étanchéité peut être repoussée, dans la zone d'un élément de maintien (45), ajusté solidaire du toit, au moins pour le doigt de coulisse (19).

14. Toit coulissant selon l'une des revendications précédentes, **caractérisé en ce qu'**entre les tronçons de toit (D1, D2, D3, D4) sont disposées, dans la zone de chacun des bords frontaux (S2, S3, S4), des baguettes d'étanchéité (46, 47) se faisant face, une baguette d'étanchéité (46) étant constituée d'un profilé à chambre creuse élastique, et l'autre baguette d'étanchéité (47) opposée étant constituée d'une baguette massive élastique, et au-dessous du profilé à chambre creuse, un profilé de support (48), pourvu d'une rigole s'étendant transversalement, étant relié aux tronçons de toit (D2, D3, D4).
